# EUROPÄISCHE PATENTSCHRIFT

(11) **EP 2 175 735 B1**
(45) Veröffentlichungstag und Bekanntmachung des Hinweises auf die Patenterteilung: **25.04.2018**
(21) Anmeldenummer: 08785410.5
(22) Anmeldetag: 30.07.2008
(51) Int. Cl.: A22B 5/16, A22C 25/17

(54) **VORRICHTUNG UND VERFAHREN ZUM ENTHÄUTEN VON FISCHFILETS**
DEVICE AND METHOD FOR SKINNING FISH FILLETS
DISPOSITIF ET PROCÉDÉ D'ENLÈVEMENT DE LA PEAU DE FILETS DE POISSON

(30) Priorität: 11.08.2007 DE 102007038365
(43) Veröffentlichungstag der Anmeldung: 21.04.2010
(73) Patentinhaber: Nordischer Maschinenbau Rud. Baader GmbH + Co. KG, 23560 Lübeck (DE)
(72) Erfinder: SCHWARZ, Olaf, 23966 Wismar (DE)
(74) Vertreter: Stork Bamberger Patentanwälte PartmbB
(86) Internationale Anmeldenummer: PCT/EP2008/006504
(87) Internationale Veröffentlichungsnummer: WO 2009/021672

(56) Entgegenhaltungen:
- DE-A1- 4 322 478
- US-A- 5 236 323
- US-A1- 2004 248 509
- US-A1- 2006 035 004
- US-B1- 6 213 863

## Beschreibung

Die Erfindung betrifft eine Vorrichtung zum Enthäuten von Fischfilets, umfassend ein Zuführelement zum Zuführen der Fischfilets in den Bereich eines Enthäutemessers, das Enthäutemesser zum Trennen der Haut vom Fischfilet, eine Mitnehmerwalze für die vom Fischfilet getrennte Haut, ein Andrückelement mit einem Mittel zur Positionskontrolle des Andrückelementes sowie ein Abtransportelement zum Abtransportieren der enthäuteten Fischfilets. Des Weiteren betrifft die Erfindung ein Verfahren zum Enthäuten von Fischfilets, umfassend die Schritte: Zuführen eines aus Fischfilets gebildeten Produktstroms auf einem Zuführelement, Enthäuten der Fischfilets mittels eines Enthäutemessers, Auslenken eines Andrückelementes durch die Fischfilets während des Enthäutevorgangs, wobei durch das Auslenken ein entsprechendes Signal auslöst wird, und separates Abführen der enthäuteten Fischfilets auf einem Abförderelement einerseits und der abgetrennten Haut in einen zwischen einer Mitnehmerwalze und dem Enthäutemesser gebildeten Spalt andererseits.

Solche Vorrichtungen und Verfahren kommen in der Fisch verarbeitenden Industrie zum Einsatz. Dabei werden die Fischfilets unterschiedlicher Größe bzw. Länge üblicherweise mit ihrer Schwanzseite voraus auf dem Zuführelement in den Bereich des Trennmittels gefördert. Mit dem Trennmittel wird die Haut vom Fischfilet getrennt. Während des Trennvorgangs wird das Andrückelement durch den Fischfiletkörper selbst ausgelenkt. Neben der Tatsache, dass das Andrückelement das Fischfilet nach unten drückt und während des Trennvorgangs hält, dient das ausgelenkte Andrückelement auch als Signalgeber. Solange das Andrückelement durch das Fischfilet angehoben ist, wird angezeigt, dass der Enthäutevorgang noch nicht abgeschlossen ist. Erst wenn das dickere kopfseitige Ende des Fischfilets das Trennmittel vollständig verlassen hat, senkt sich das Andrückelement wieder in seine Ursprungsstellung und zeigt damit an, dass der Enthäutevorgang erfolgreich abgeschlossen ist. Die Vorrichtungen und Verfahren können auch zum Abtrennen anderer Oberflächenschichten, wie z.B. Fettschichten oder dergleichen von Fisch- oder Fleischprodukten verwendet werden, wobei die Förderrichtung der Produkte variabel ist.
Es sind Vorrichtungen und Verfahren mit den Merkmalen der Oberbegriffe der Ansprüche 1 und 6 aus der DE 43 22 478 A1 und US 2004/0248509 A1 bekannt. Es besteht jedoch bei diesen Vorrichtungen und Verfahren der Nachteil, dass die Fischfilets, die mit Knochen- oder Flossenresten oder anderen Verunreinigungen versehen sind, in der Praxis am Enthäutemesser hängen bleiben können. Dadurch entsteht dann ein Produktstau am Enthäutemesser, der die Bearbeitung, nämlich das Enthäuten nachfolgender Fischfilets behindert. Dies führt zu einer fehlerhaften Bearbeitung der Fischfilets, wodurch die enthäuteten Fischfilets nur noch von geringer Qualität sind. Es kann auch zu einer totalen Verstopfung im Bereich des Spaltes zwischen Mitnehmerwalze und Enthäutemesser kommen, was zu einem Stillstand des Produktstroms führt. Allein das durch das Andrückelement ausgelöste Signal ist jedoch nicht ausreichend, zwischen einer Störung bzw. einem Fischfilet von großer Länge zu unterscheiden. Anders ausgedrückt könnte die Tatsache, dass das Andrückelement länger als vorgesehen ausgelenkt ist, einerseits bedeuten, dass eine Störung vorliegt, und andererseits anzeigen, dass ein besonders langes Produkt enthäutet wird. Eine zuverlässige Aussage über den tatsächlichen Zustand des Produktstroms lässt sich demnach nicht treffen.
Es ist daher Aufgabe der vorliegenden Erfindung, eine kompakte Vorrichtung zu schaffen, die einen gleichmäßigen und kontinuierlichen Produktstrom sicherstellt. Des Weiteren besteht die Aufgabe darin, ein entsprechendes Verfahren vorzuschlagen.

Diese Aufgabe wird durch eine Vorrichtung gemäß Anspruch 1 dadurch gelöst, dass im Bereich der Mitnehmerwalze ein Element zur Überwachung des Einlaufs der Fischfilets auf die Mitnehmerwalze und des Auslaufs der Fischfilets von der Mitnehmerwalze angeordnet ist. Dadurch ist es auf überraschend einfache Weise möglich, im Zusammenwirken mit dem ohnehin vorhandenen und vom Andrückelement ausgelösten Signal den Produktstrom zu steuern bzw. zu regeln.
Eine zweckmäßige Weiterbildung der Erfindung zeichnet sich dadurch aus, dass das Element zur Überwachung des aus Fischfilets gebildeten Produktstroms in Transportrichtung T der Fischfilets vor dem Andrückelement angeordnet ist. Durch den Abstand zwischen dem Element einerseits und dem Andrückelement andererseits ist beim Transport der Fischfilets ein Zeitfenster definiert, das die Steuerung und/oder Regelung vereinfacht.
Vorteilhafterweise ist das Element zur Überwachung eine Lichtschranke. Damit ist eine besonders zuverlässige und kostengünstige Überwachung sichergestellt.
Eine bevorzugte Ausführungsform ist dadurch gekennzeichnet, dass die Lichtschranke derart ausgebildet und eingerichtet ist, dass die gesamte Breite der Mitnehmerwalze quer zur Transportrichtung T überwacht wird. Mit dieser Ausbildung wird gewährleistet, dass der Einlauf und Auslauf der Produkte unabhängig von ihrer Lage auf dem Zuführelement und dann auf der Mitnehmerwalze zuverlässig überwacht werden kann.

Die Aufgabe wird auch durch ein Verfahren gemäß Anspruch 6 dadurch gelöst, dass das Einlaufen der Fischfilets auf die Mitnehmerwalze und das Auslaufen der Fischfilets von der Mitnehmerwalze von einem Element überwacht werden. Die sich daraus ergebenden Vorteile wurden bereits im Zusammenhang mit der Vorrichtung erläutert, weshalb zur Vermeidung von Wiederholungen auf die entsprechenden Passagen verwiesen wird.
Weitere zweckmäßige oder vorteilhafte Merkmale und Ausgestaltungen der Erfindung ergeben sich aus den Unteransprüchen und der Beschreibung. Eine besonders bevorzugte Ausführungsform der Vorrichtung sowie das Verfahren werden anhand der beigefügten Zeichnung näher erläutert. In der Zeichnung zeigt:

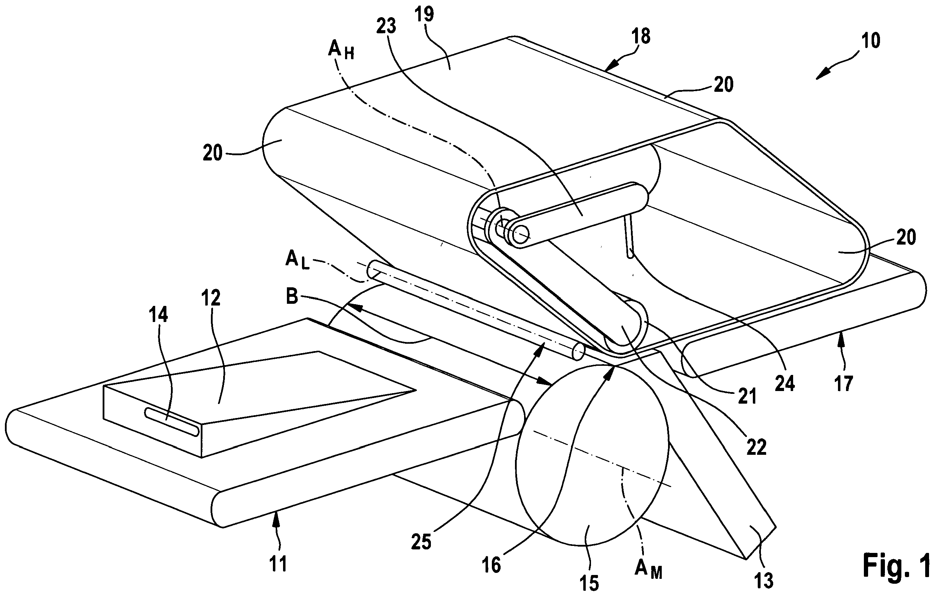

Fig. 1 eine perspektivische Darstellung der erfindungsgemäßen Vorrichtung.
Die in der einzigen Figur beschriebene Vorrichtung dient zum Enthäuten von Fischfilets. Selbstverständlich kann die Vorrichtung auch zum Trennen von anderen Oberflächenschichten von Fischfilets oder anderen Produkten dienen.

Die Vorrichtung 10 umfasst ein Zuführelement 11 zum Zuführen vereinzelter Fischfilets 12. Die Fischfilets 12 können Kopfseite oder Schwanzseite voraus, wie in der Figur 1 gezeigt, in Transportrichtung T in den Bereich eines Enthäutemessers 13 transportiert werden. Die Fischfilets 12 können frei von Verunreinigungen oder mit Verunreinigungen, beispielsweise Knochenresten 14, Flossenresten oder dergleichen versehen sein. Das Enthäutemesser 13, das in der beschriebenen Ausführungsform federbelastet ausgebildet ist, kann unterschiedlich ausgebildet sein und beispielsweise ein Bandmesser und/oder ein stehendes Messer und/oder andere Trennmittel umfassen. In Transportrichtung T hinter dem Zuführelement 11, das vorzugsweise als Band- oder Kettenförderer ausgebildet ist, ist eine Mitnehmerwalze 15 für die vom Fischfilet 12 getrennte Haut angeordnet, die um eine Achse A_{M} rotierend ausgebildet ist. Die Achse A_{M} verläuft quer zur Transportrichtung T. Zum Antrieb der Mitnehmerwalze 15 ist ein (nicht dargestellter) Antrieb vorgesehen sein.

In Transportrichtung T hinter der Mitnehmerwalze 15 ist das Enthäutemesser 13 angeordnet. Das Enthäutemesser 13 weist zur Mitnehmerwalze 15 zur Bildung eines Spaltes 16 einen Abstand zur Aufnahme der vom Fischfilet 12 getrennten Haut auf. An das Enthäutemesser 13 schließt sich ein Abförderelement 17 zum Abtransport der enthäuteten Fischfilets 12 an, das ebenfalls als Band- oder Kettenförderer ausgebildet ist. Die vom Fischfilet 12 getrennte Haut wird über den Spalt 16 separat abgeführt. Oberhalb des Enthäutemessers 13 ist ein Andrückelement 18 angeordnet. Das Andrückelement 18 umfasst in der gezeigten Ausführungsform ein umlaufendes Band 19, das um mehrere Umlenk- und/oder Antriebselemente 20 geführt ist.

Des Weiteren umfasst das Andrückelement 18 eine Rolle 21, die an einem schwenkbaren Hebelarm 22 angeordnet ist. Der Hebelarm 22 ist um eine Achse A_{H} schwenkbar. Derselben Achse A_{H} ist eine Schaltfahne 23 oder dergleichen zugeordnet. Die Schaltfahne 23 und der Hebelarm 22 sind relativ zueinander fest, so dass eine Bewegung des Hebelarmes 22 entsprechend von der Schaltfahne 23 ausgeführt wird. Der Schaltfahne 23 ist ein Näherungsschalter 24 zugeordnet. Anders ausgedrückt ist der Näherungsschalter 24 in Wirkverbindung mit der Schaltfahne 23, so dass der Näherungsschalter 24 in Abhängigkeit der Position der Schaltfahne 23 ein Signal auslösen kann. Allgemein gesprochen bilden die Schaltfahne 23 und der Näherungsschalter 24 ein Mittel zur Positionskontrolle des Andrückelementes 18 bzw. der Rolle 21.

Im Bereich der Mitnehmerwalze 15 ist ein Element 25 zur Überwachung des Einlaufs der Fischfilets 12 auf die Mitnehmerwalze 15 und des Auslaufs der Fischfilets 12 von der Mitnehmerwalze 15 angeordnet. Das Element 25, dass oberhalb der Mitnehmerwalze 15 im Bereich der Transportebene E liegt, ist in Transportrichtung T der Fischfilets 15 vor dem Andrückelement 18 und insbesondere vor der Rolle 21 angeordnet. Vorzugsweise ist das Element 25 im Bereich des höchsten Punktes der Mitnehmerwalze 15 bzw. bezogen auf die Breite der Mitnehmerwalze 15 im Bereich der höchsten Linie der Mitnehmerwalze 15 angeordnet. Das Element 25 dient einfach ausgedrückt dazu, den Beginn jedes kontinuierlich geforderten Fischfilets 12 sowie das Ende jedes Fischfilets 12 zu erkennen und kann auch an anderer Position als der beschriebenen angeordnet sein.

Vorzugsweise ist das Element 25 als Lichtschranke ausgebildet. Die Lichtschranke ist derart ausgebildet und eingerichtet, dass die gesamte Breite B der Mitnehmerwalze 15 überwacht wird. Dazu erstreckt sich die Lichtschranke quer zur Transportrichtung T über die gesamte Breite B der Mitnehmerwalze 15. Die Mittelachse A_{L} der Lichtschranke bzw. die Lichtstrahlen verlaufen parallel zur Achse A_{M} der Mitnehmerwalze 15. In anderen Ausführungsformen können Sender und Empfänger der Lichtschranke auch versetzt und/oder in einem Winkel zueinander angeordnet sein. Die Lichtschranke ist in der Figur 1 nur schematisch angedeutet, da optional auch andere Mittel, z.B. mechanische Fühler oder dergleichen, optische Messelemente, wie z.B. eine Kamera oder dergleichen, oder Kombinationen davon eingesetzt werden können. Entscheidend ist, dass das Mittel derart ausgebildet und eingerichtet ist, dass vor dem Auslösen eines Signals durch das Fischfilet 12 selbst mittels des Andrückelementes 18 bzw. der Rolle 21 zusätzliche Informationen zur Positionskontrolle der Fischfilets 12 vor dem eigentlichen Trennen ermittelbar sind.

Die Erfindung ist aber nicht auf die beschriebene Ausführungsform beschränkt. So können das endlos umlaufende Zuführelement 11 und das endlos umlaufende Abförderelement 17 auch als Muldenförderer oder in anderer bekannter Weise ausgebildet sein.

Auch kann das Andrückelement 18 bzw. das Mittel zur Positionskontrolle in unterschiedlicher Weise mit bekannten Elementen ausgebildet sein. Anstelle der Rolle 21 kann auch eine schwenkbare Klappe oder dergleichen vorgesehen sein.

Im Folgenden wird das Verfahrensprinzip anhand der einzigen Figur näher erläutert: Die Fischfilets 12 werden auf dem Zuführelement 11 in Richtung der sich drehenden Mitnehmerwalze 15 transportiert. Beim Einlaufen der Fischfilets 12 auf die Mitnehmerwalze wird die Lichtschranke unterbrochen. Die Fischfilets 12 laufen mit der Haut in den Spalt 16 zwischen der Mitnehmerwalze 15 und dem Enthäutemesser 13. Das von der Haut befreite Fischfilet 12 läuft über das Enthäutemesser 13 hinweg in Richtung des Abförderelementes 17 und hebt dabei die Rolle 21 im umlaufenden Band 19 an. Sobald die Rolle 21 angehoben wird, entfernt sich auch die Schaltfahne 23 vom Näherungsschalter 24, wodurch ein Signal ausgelöst wird.

Bei normalem Ablauf passiert das nachlaufende Ende, vorzugsweise das dickere kopfseitige Ende, der Fischfilets 12 die Lichtschranke vollständig und gibt diese wieder frei. Damit ist die Information bekannt, dass das Fischfilet 12 in seiner gesamten Länge auf die Mitnehmerwalze 15 eingelaufen und von dieser wieder ausgelaufen ist. Abhängig von der Geschwindigkeit der Vorrichtung 20 bzw. genauer von Zuführelement 11, Mitnehmerwalze 15 und Abförderelement 17, senkt sich das Andrückelement 18 bzw. die Rolle 21 nach einer definierten Zeit t wieder ab, so dass die Schaltfahne 23 den Näherungsschalter 24 wieder bedämpft. Mit anderen Worten ist der Enthäutevorgang abgeschlossen und das enthäutete Fischfilet 12 hat den Bereich des Enthäutemessers 13 über das Abförderelement 17 verlassen.

Für den Fall, dass das Fischfilet 12 störende Verunreinigungen aufweist, wie z.B. Knochenreste 14, kann das zu enthäutende Fischfilet 12 am Enthäutemesser 13 hängen bleiben. Das Fischfilet 12 hat zwar die Lichtschranke bereits wieder frei gegeben. Das Andrückelement 18 bzw. die Rolle 21 kann jedoch nicht absenken, so dass auch der Näherungsschalter 24 nicht bedämpft wird. Senkt sich also nach einer definierten Zeit t die Rolle 21 nicht ab, wird automatisch eine Aktion zur Beseitigung der Fehlerquelle ausgelöst. Ohne die Lichtschranke wäre ein solcher Automatismus nicht möglich, da beispielsweise auch besonders lange Fischfilets 12 die Lichtschranke unterbrochen halten könnten, also gar keine Störung vorliegt.

Sobald die Lichtschranke also frei gegeben ist und sich die Rolle 21 nicht nach einer definierten Zeit t wieder absenkt, kann z.B. die Rolle entgegen der Transportrichtung T vor das Enthäutemesser 13 geschoben werden. Auch könnte der Spalt 16 zwischen Mitnehmerwalze 15 und Enthäutemesser 13 vergrößert werden, um die verklemmten Fischfilets 12 oder Teile davon wieder frei zu geben. Es besteht weiterhin die Möglichkeit, auch zusätzliche Schnitte mit dem Enthäutemesser 13 oder zusätzlichen Klingen oder dergleichen auszuführen, um die störenden Bereiche frei zu schneiden. Eine weitere Option besteht darin, die Rolle 21 kurzzeitig anzuheben, um die fehlerhaften bzw. störenden Fischfilets 12 aus dem Bereich des Enthäutemessers 13 zu schieben. Selbstverständlich sind auch andere Möglichkeiten der Fehlerbeseitigung einsetzbar.

Es können jedoch auch andere so genannte Störfälle auftreten. Beispielsweise in dem Fall, dass die Lichtschranke durch ein Fischfilet 12 mit entsprechenden störenden Verunreinigungen unterbrochen bleibt, während das Andrückelement 18 bzw. die Rolle 21 bereits wieder in die Ausgangslage abgesenkt ist. Auch dann wird eine Störung angezeigt, die durch eine entsprechende Aktion beseitigt werden kann. Die Unterbrechung der Lichtschranke kann genauso gut durch Schmutz oder dergleichen ausgelöst sein.

Ein anderer Fall, bei dem sowohl die Lichtschranke unterbrochen ist als auch das Andrückelement 18 bzw. die Rolle 21 noch nicht wieder in die Ausgangslage abgesenkt werden kann, wird ebenfalls als Störung mit den entsprechenden Konsequenzen angezeigt.

Es können demnach unterschiedliche Fehler und Störungen angezeigt werden, so dass sowohl vor geschaltete als auch nach geschaltete Produktionsschritte gesteuert und/oder geregelt werden können.

Zur Steuerung und/oder Regelung der Vorrichtung 10 einerseits und zur Ausführung der automatischen Fehlerbeseitigung andererseits ist der Vorrichtung 10 eine (nicht dargestellte) Steuerung zugeordnet. Unabhängig von der Meldung eines Fehlers und dessen automatischer Behebung könnte auch ein optisches und/oder akustisches Signal erzeugt werden, dass einer Bedienperson einen notwendigen Eingriff in die Vorrichtung 10 anzeigt. Des Weiteren könnten die ermittelten Signale und erhaltenen Informationen auch dazu genutzt werden, die Transportgeschwindigkeit der Vorrichtung 10 zu reduzieren bzw. die Vorrichtung 10 ganz zu stoppen, sollte die Fehlerbeseitigung nicht innerhalb einer vorgegebenen Zeit t abgeschlossen sein.

## Patentansprüche

1. Vorrichtung (10) zum Enthäuten von Fischfilets (12), umfassend ein Zuführelement (11) zum Zuführen der Fischfilets (12) in den Bereich eines Enthäutemessers (13), das Enthäutemesser (13) zum Trennen der Haut vom Fischfilet (12), eine Mitnehmerwalze (15) für die vom Fischfilet (12) getrennte Haut, ein Andrückelement (18) mit einem Mittel zur Positionskontrolle des Andrückelementes (18) sowie ein Abtransportelement (17) zum Abtransportieren der enthäuteten Fischfilets (12), **dadurch gekennzeichnet, dass** im Bereich der Mitnehmerwalze (15) ein Element (25) zur Überwachung des Einlaufs der Fischfilets (12) auf die Mitnehmerwalze (15) und des Auslaufs der Fischfilets (12) von der Mitnehmerwalze (15) angeordnet ist.

2. Vorrichtung nach Anspruch 1, **dadurch gekennzeichnet, dass** das Element (25) zur Überwachung des aus Fischfilets (12) gebildeten Produktstroms im Bereich der Mitnehmerwalze (15) in Transportrichtung T der Fischfilets (12) vor dem Andrückelement (18) angeordnet ist.

3. Vorrichtung nach Anspruch 1 oder 2, **dadurch gekennzeichnet, dass** das Element (25) zur Überwachung eine Lichtschranke ist.

4. Vorrichtung nach Anspruch 3, **dadurch gekennzeichnet, dass** die Lichtschranke derart ausgebildet und eingerichtet ist, dass die gesamte Breite B der Mitnehmerwalze (15) quer zur Transportrichtung T überwacht wird.

5. Vorrichtung nach Anspruch 3 oder 4, **dadurch gekennzeichnet, dass** die Lichtschranke parallel zur Achse A_{M} der Mitnehmerwalze (15) angeordnet bzw. ausgerichtet ist.

6. Verfahren zum Enthäuten von Fischfilets, umfassend die Schritte:
- Zuführen eines aus Fischfilets (12) gebildeten Produktstroms auf einem Zuführelement (11),
- Enthäuten der Fischfilets (12) mittels eines Enthäutemessers (13),
- Auslenken eines Andrückelementes (18) durch die Fischfilets (12) während des Enthäutevorgangs, wobei durch das Auslenken ein entsprechendes Signal auslöst wird, und
- separates Abführen der enthäuteten Fischfilets (12) auf einem Abförderelement (17) einerseits und der abgetrennten Haut in einen zwischen einer Mitnehmerwalze (15) und dem Enthäutemesser (13) gebildeten Spalt (16) andererseits,
**dadurch gekennzeichnet, dass** das Einlaufen der Fischfilets (12) auf die Mitnehmerwalze (15) und das Auslaufen der Fischfilets (12) von der Mitnehmerwalze (15) von einem Element (25) überwacht werden.

7. Verfahren nach Anspruch 6, **dadurch gekennzeichnet, dass** beim Übergang jedes Fischfilets (12) vom Zuführelement (11) auf die Mitnehmerwalze (15) eine Lichtschranke unterbrochen wird, die beim Verlassen des Fischfilets (12) von der Mitnehmerwalze (15) wieder frei gegeben wird.

8. Verfahren nach Anspruch 6 oder 7, **dadurch gekennzeichnet, dass** die Mitnehmerwalze (15) über die gesamte Breite B überwacht wird.

9. Verfahren nach einem der Ansprüche 6 bis 8, **dadurch gekennzeichnet, dass** das vom Andrückelement (18) ausgelöste Signal sowie die von der Überwachung der Mitnehmerwalze (15) erhaltenen Informationen miteinander in Beziehung gebracht und zur Steuerung und/oder Regelung von Maßnahmen zur Beseitigung von Störungen des Produktstroms verwendet werden.

## Claims

1. Apparatus (10) for skinning fish fillets (12), comprising a delivery element (11) for delivering the fish fillets (12) into the region of a skinning knife (13), the skinning knife (13) for separating the skin from the fish fillet (12), a driver roller (15) for the skin separated from the fish fillet (12), a contact pressure element (18) having a means for controlling the position of the contact pressure element (18), and a discharge element (17) for carrying away the skinned fish fillets (12), **characterised in that** in the region of the driver roller (15) is arranged an element (25) for monitoring the input of fish fillets (12) onto the driver roller (15) and the output of fish fillets (12) from the driver roller (15).

2. Apparatus according to claim 1, **characterised in that** the element (25) for monitoring the product stream composed of fish fillets (12) in the region of the driver roller (15) is arranged in front of the contact pressure element (18) in the direction of transport T of the fish fillets (12).

3. Apparatus according to claim 1 or 2, **characterised in that** the monitoring element (25) is a light barrier.

4. Apparatus according to claim 3, **characterised in that** the light barrier is constructed and designed in such a way that the full width B of the driver roller (15) transverse to the direction of transport T is monitored.

5. Apparatus according to claim 3 or 4, **characterised in that** the light barrier is arranged or oriented parallel to the axis A_{M} of the driver roller (15).

6. Method for skinning fish fillets, comprising the steps of:
- delivering a product stream composed of fish fillets (12) on a delivery element (11),
- skinning the fish fillets (12) by means of a skinning knife (13),
- deflection of a contact pressure element (18) by the fish fillets (12) during the skinning operation, a corresponding signal being triggered by deflection, and
- separately carrying away the skinned fish fillets (12) on a discharge element (17) on the one hand and the separated skin into a gap (16) formed between a driver roller (15) and the skinning knife (13) on the other hand,
**characterised in that** the input of the fish fillets (12) onto the driver roller (15) and the output of the fish fillets (12) from the driver roller (15) are monitored by an element (25).

7. Method according to claim 6, **characterised in that** upon passage of each fish fillet (12) from the delivery element (11) onto the driver roller (15), a light barrier is interrupted, which is released again when the fish fillet (12) leaves the driver roller (15).

8. Method according to claim 6 or 7, **characterised in that** the driver roller (15) is monitored across the full width B.

9. Method according to any of claims 6 to 8, **characterised in that** the signal triggered by the contact pressure element (18) and the information obtained from monitoring the driver roller (15) are correlated with each other and used to control and/or regulate measures for eliminating faults of the product stream.

## Revendications

1. Un dispositif (10) d'enlèvement de la peau de filets de poisson (12), lequel dispositif présente un élément d'amenée (11) qui amène les filets de poisson (12) dans la zone d'un couteau (13) d'enlèvement de la peau, le couteau (13) qui enlève la peau du filet de poisson (12), un cylindre d'entraînement (15) pour la peau enlevée du filet de poisson (12), un élément de poussée (18) qui présente un moyen de contrôle de la position de l'élément de poussée (18) ainsi qu'un élément d'évacuation (17) qui évacue les filets de poisson (12) dont la peau a été enlevée, **caractérisé en ce qu'**un élément (25) de surveillance de l'entrée des filets de poisson (12) sur le cylindre d'entraînement (15) et de la sortie des filets de poisson (12) du cylindre d'entraînement (15) est disposé dans la zone du cylindre d'entraînement (15).

2. Un dispositif selon la revendication 1, **caractérisé en ce que** l'élément (25) de surveillance du flux de produit constitué des filets de poisson (12) est disposé avant l'élément de poussée (18) dans la zone du cylindre d'entraînement (15) dans la direction de transport T des filets de poisson (12).

3. Un dispositif selon la revendication 1 ou 2, **caractérisé en ce que** l'élément (25) de surveillance est un dispositif photoélectrique.

4. Un dispositif selon la revendication 3, **caractérisé en ce que** le dispositif photoélectrique est conçu et configuré de façon à ce que la largeur totale B du cylindre d'entraînement (15) est surveillée de façon transversale par rapport à la direction de transport T.

5. Un dispositif selon la revendication 3 ou 4, **caractérisé en ce que** le dispositif - photoélectrique est conçu et configuré parallèlement à l'axe A_{M} du cylindre d'entraînement (15).

6. Un procédé d'enlèvement de la peau de filets de poisson comprenant les étapes suivantes :
- Amenage d'un flux de produits constitué de filets de poisson (12) sur un élément d'amenée (11),
- enlèvement de la peau des filets de poisson (12) à l'aide d'un couteau d'enlèvement de la peau (13),
- déplacement d'un élément de poussée (18) par les filets de poisson (12) durant l'opération d'enlèvement de la peau, durant lequel un signal correspondant est déclenché par le déplacement, et
- évacuation indépendante des filets de poisson (12) dont la peau a été enlevée sur un élément d'évacuation (17) d'un côté, et de la peau séparée dans une fente (16) formée entre un cylindre d'entraînement (15) et le couteau d'enlèvement de la peau (13) de l'autre côté,
**caractérisé en ce que**, l'introduction des filets de poisson (12) sur le cylindre d'entraînement (15) et l'évacuation des filets de poisson (12) du cylindre d'entraînement (15) sont surveillés par un élément (25).

7. Un procédé selon la revendication 6, **caractérisé en ce que** le faisceau d'un dispositif photoélectrique, qui sera à nouveau désactivé lorsque les filets de poisson (12) quittent le cylindre d'entraînement (15), est interrompu lorsque chaque filet de poisson (12) passe de l'élément d'amenée (11) au cylindre d'entraînement (15).

8. Un procédé selon la revendication 6 ou 7, **caractérisé en ce que** le cylindre d'entraînement (15) est surveillé sur toute la largeur B.

9. Un procédé selon l'une des revendications 6 à 8, **caractérisé en ce que** le signal déclenché par l'élément de poussée (18) et les informations obtenues par la surveillance du cylindre d'entraînement (15) sont mis en relation et servent à assurer la commande et/ou le réglage de mesures d'élimination des défauts du flux de produit.
